# EUROPÄISCHE PATENTSCHRIFT

(11) **EP 1 400 710 B1**
(45) Veröffentlichungstag und Bekanntmachung des Hinweises auf die Patenterteilung: **22.11.2006**
(21) Anmeldenummer: 03019617.4
(22) Anmeldetag: 04.09.2003
(51) Int. Cl.: F16B 43/00

(54) **Ring aus mindestens zwei Teilringen und Verfahren zur Verbindung der Teilringe zum geschlossenen Ringteil**
Ring made of at least two partial rings and method for connecting the partial rings in a closed ring
Anneau d'au moins deux anneaux partiels et méthode pour connecter les anneaux partiels en forme fermée

(30) Priorität: 21.09.2002 DE 10244029
(43) Veröffentlichungstag der Anmeldung: 24.03.2004
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- DE-A- 10 109 914
- US-A- 1 332 626

## Beschreibung

Die Erfindung betrifft einen Schutzschlauch-Ring gemäß Anspruch 1 mit mindestens zwei miteinander zu verbindenden Teilringen mit Verbindungseinrichtungen an den Stirnseiten der Teilringe sowie ein Verfahren zum Schließen eines Ringteils, bestehend aus mindestens zwei miteinander zu verbindenden Teilringen mit Verbindungseinrichtungen an den Stirnseiten der Teilringe.

In Verbindung mit Schutzschläuchen für Versorgungsleitungen an Maschinen oder Robotern werden oftmals geschlossene kreissymmetrische Teile eingesetzt, sei es als auf den Enden des Rippen-Schutzschlauches aufgesetzte Endstücke, sei es als Führungshalterungen für einen solchen Schlauch oder Versorgungsleitung, sei es als Schutz- oder Verschleißringe. Diese geschlossenen Ringteile weisen oftmals eine komplexe Struktur auf. Sie können direkt mittels Schrauben fest miteinander verbunden werden, was aufwendig ist und in der Regel dazu führt, dass Halbschalen dieser Funktionsteile nicht in einem einzigen Werkzeug geschaffen werden können, sondern hierzu unterschiedliche Werkzeuge erforderlich sind. Es wird daher oft vorgesehen, diese kreissymmetrischen Funktionsteile durch Teilringe zu halten, sei durch einen geschlossenen Ring oder einen geteilten Ring. Geschlossene Ringe sind, wenn sie zerstört werden, nicht nachrüstbar. Geteilte Ringe weisen an den Stirnseiten ihrer Teilringe Verbindungseinrichtungen aus, die in der Regel als nachgiebige Haken ausgebildet sind, so dass die beiden Teilringe zum geschlossenen Ringteil durch radiale Bewegung aufeinander zu verhakt werden können, wobei die elastischen Verbindungseinrichtungen während des Schließvorganges mittels elastischer Haken mit Hinterschneidungen einander hinterhaken. Die Haltekraft dieser elastischen Verbindungsausbildungen ist oft nicht ausreichend, so dass ein solcher geschlossener Ring wieder auseinanderfallen kann. Soweit andere Verbindungsmechanismen verwendet werden, führt dies dazu, dass diese im allgemeinen recht groß aufbauen und damit keine geringe kreisförmige Außenkontur aufweisen, wie dies bei den genannten Einsatzzwecken wünschenswert oder sogar notwendig ist.

Der Erfindung liegt daher die Aufgabe zugrunde, ein aus mehreren Einzelteilen bestehendes Ringteil zu schaffen, das kompakt ist, kreisförmige Innen- und Außenkonturen bei möglichst geringer Stärke aufweist und dennoch eine zuverlässige sichere und stabile Schließverbindung der Teilringe ermöglicht.

Erfindungsgemäß wird die genannte Aufgabe mit einem Ring der eingangs genannten Art gelöst, welches dadurch gekennzeichnet ist, die Verbindungseinrichtungen nicht nachgiebige, formschlüssig ineinander greifende Formausbildungen sind. Zur Verbindung der Teilringe zu einem geschlossenen Ringteil sieht die Erfindung verfahrensmäßig vor, dass die Teilringe durch axiales Ineinanderschieben ihrer als ineinander greifende Formausbildungen ausgebildeten Verbindungseinrichtungen miteinander verbunden werden.

Zur Verbindung der Teilringe zu einem geschlossenen Ringteil sieht die Erfindung vor, dass die Teilringe durch axiales Ineinanderschieben ihrer als ineinander greifende Formausbildungen ausgebildeten Verbindungseinrichtungen miteinander verbunden werden.

Die Verbindung der Teilringe zu einem Ringteil erfolgt dabei insbesondere in radialer und in Umfangsrichtung formschlüssiger Weise. Die Formausbildungen sind nicht nachgiebig, sondern starr und daher recht stabil, so dass ein unbeabsichtigtes Lösen, auch bei Krafteinwirkungen, nahezu ausgeschlossen ist und sich daher ein stabiles Ringteil ergibt.

Es ist dabei vorgesehen, dass die Formausbildungen einander hintergreifende Haken aufweisen. Die einzelnen Teilringe sind identisch ausgebildet, wobei in bevorzugter Ausbildung vorgesehen ist, dass die Formausbildungen im wesentlichen punktsymmetrisch ausgebildet sind.

Eine weitere bevorzugte Ausgestaltung sieht vor, dass hintergreifende Flächen der Formausbildungen geneigt zum Radius des Ringteils ausgerichtet sind, wobei insbesondere die zum Radius geneigt ausgebildeten Flächen von einer inneren konkaven Kante, in deren Bereich der Haken mit dem Teilring verbunden ist, zu einer äußeren freien konvexen Kante auf den eigentlichen Teilring hin verlaufen.

Darüber hinaus ist es vorteilhaft, wenn die Formausbildungen der Teilringe in axialer Richtung aneinander reiben und in geschlossener Stellung durch eine gewisse Reibkraft gehalten werden.

Weitere Vorteile und Merkmale der Erfindung ergeben sich aus der nachfolgenden Beschreibung, in der ein Ausführungsbeispiel der Erfindung unter Bezugnahme auf die Zeichnung im einzelnen erläutert ist. Dabei zeigt:
- Fig. 1: eine bevorzugte Ausgestaltung eines geschlossenen erfindungsgemäßen Schließrings in Seitenansicht;
- Fig. 2: einen Halbring eines erfindungsgemäßen Schließrings in Seitenansicht;
- Fig.3a bis 3c: Verfahrensschritte beim Schließen eines erfindungsgemäßen Schließrings; und
- Figuren 4a, 4b: ein aus zwei Halbschalen bestehendes Funktionsteil
- ohne Schließring (Figur 4a)
- mit aufgeschobenem geschlossenen Schließring (Figur 4b)

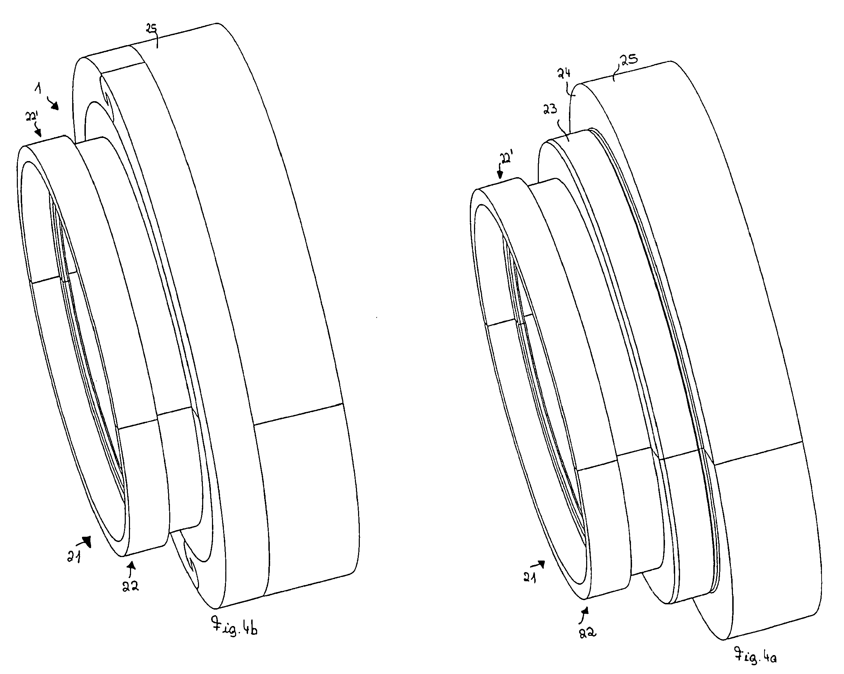

Ein erfindungsgemäßer Ring 1 wird in der Regel als Schließring eingesetzt, um aus mehreren Teilringen und Elementen bestehende Funktionsteile, wie an einem Versorgungsleitungen umschließenden Rippenschlauch angeordnete Endstücke, gegebenenfalls in gelenkiger oder Trompetenausbildung sowie trompetenartige oder doppelkonusartige Führungselemente für einen solchen Schlauch, radial zusammenzuhalten, wobei ein Endstück für einen solchen Rippenschlauch in einer einfachen Ausgestaltung in den Figuren 4a und 4b dargestellt ist.

In der dargestellten bevorzugten Ausgestaltung besteht der Schließring 1 aus zwei Schließteilringen 2, 2'. Die Teilringe 2, 2' sind identisch ausgebildet und weisen an ihren Stirnseiten jeweils zueinander komplementäre Formschlussausbildungen 3, 4 auf. In geschlossenem Zustand des Rings 1 greift jeweils eine Formschlussausbildung 3 des einen Teilrings 2 formschlüssig mit einer Formschlussausbildung 4 des anderen Teilrings 2' ineinander und vice versa.

Die ineinandergreifenden Formschlussausbildungen 3, 4 sind darüber hinaus im wesentlichen punkt- oder drehsymmetrisch (bei Drehungen um 180°) ausgebildet.

Die Formschlussausbildung 3 weist einen sich im inneren Bereich des Teilrings 2 (bzw. 2') erstreckenden Steg 5 und an dessen freien Ende einen hinterschnittenen Haken 6 auf. Der inneren oder zurückgewandten freien Kante 7 des Hakens 6 gegenüberliegend weist die Stirnseite des Teilrings 2, 2' eine konkave bogenförmige Stirnwandung 8 auf. Zwischen Haken 6 und Wandung 8 ist eine Ausnehmung 9 gebildet.

Die innere hinterschnittene Wandung 11 des Hakens 6 verläuft nicht in radialer Richtung, sondern geneigt zu dieser, und zwar derart, dass die Wandung 11 von der konkaven Übergangskante 12 des Steg 5 zur konvexen freien Kante 7 hin auf die bogenförmige Wandung 8 hin zurücklaufend geneigt zur Radialen verläuft.

Die Formausbildung 4 ist in einem im Bereich der äußeren Wandung des Teilrings 2, 2' ausgebildeten äußeren Steg 5', dem Haken 6', dessen freier rückwärts gerichteter Kante 7', der konkaven bogenförmigen Wandung 8', der zwischen Haken 6' und Wandung 8' ausgebildeten Ausnehmung 9', der inneren Wandung 11' sowie der inneren konvexen Kante 12' im Übergangsbereich zwischen Wandung 11' und Steg 5' komplementär zur Formausbildung 3 ausgebildet.

Die Kontur des Hakens 6 entspricht dabei genau der Kontur der Ausnehmung 9' und die Kontur des Hakens 6' genau der Ausnehmung 9, so dass der Haken jeweils in die entsprechende Ausnehmung unter Gewährleistung eines Reibschlusses einpasst.

Sie sind hinsichtlich des Mittelpunktes der Verbindungslinie der Kanten 7-12 bzw. 7'-12' auf der Fläche 8 bzw. 8' - in der Zeichnung ist der Punkt mit P bezeichnet - im wesentlichen punktsymmetrisch (bzw. um 180° drehsymmetrisch) ausgebildet. Die Punkte P, P' stimmen im geschlossenen Zustand überein. Die gesamten Formausbildungen 3, 4 sind im wesentlichen starr, nicht flexibel ausgebildet, so dass ein radiales Hinterhaken der Formausbildung nicht möglich ist.

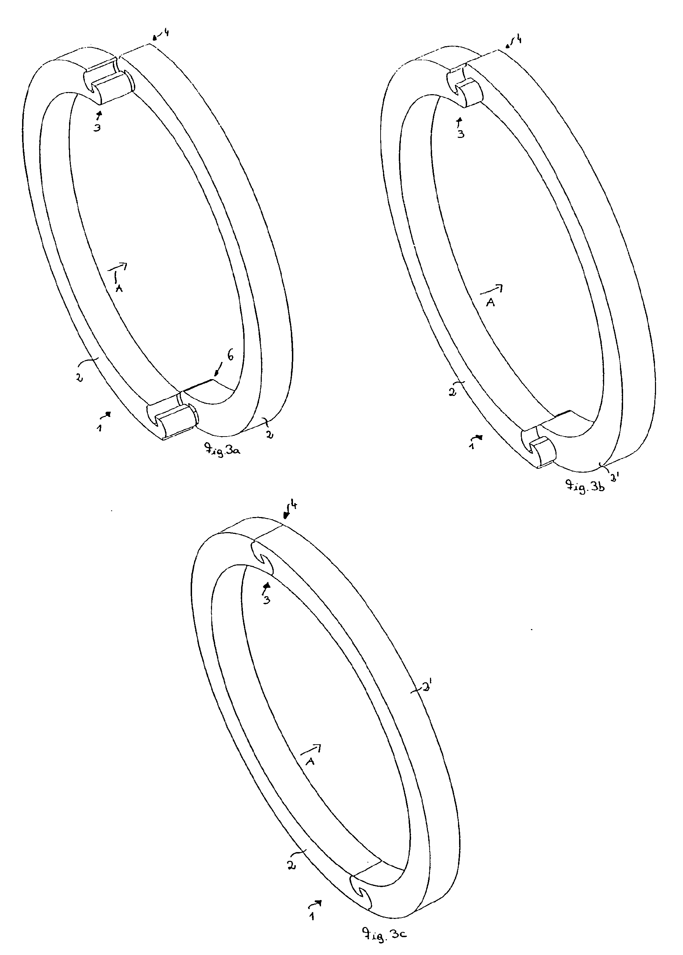

Das Schließen des Ringes 1 durch Verbinden der Teilringe 2, 2' erfolgt in der in den Figuren 3a bis 3c dargestellten Weise, indem die Teilringe 2, 2' in jeweils komplementären Formausbildungen seitlich aneinander gelegt werden, so dass der Haken 6 des ersten Teilrings 2 in der Ausnehmung 9' des anderen Teilrings 2' und der Haken 6' des anderen Teilrings 2' neben der Ausnehmung 9 des Ringteils 2 vice versa liegt; anschließend werden, wie die in der Abfolge der Figuren 3a bis 3c dargestellt ist, die Teilringe 2, 2' in Richtung des Pfeils A axial ineinander verschoben, bis die Schließstellung der Figur 3c erreicht ist.

Der erfindungsgemäße Schließring 1 dient, wie gesagt, beispielsweise einem radialen Zusammenhalten eines komplexeren Funktionsteils, wie eines Endstücks auf einem Rippen-Schutzschlauch oder dergleichen. Ein solches zweiteiliges Funktionsteil 21 bestehend aus zwei identischen Halbschalen 22, 22' ist in den Figuren 4a und 4b dargestellt. Das Funktionsteil 21 weist, wie dargestellt, mehrere abgestufte Bereiche dar. Eine unmittelbare Verbindung der beiden Halbschalen 22, 22' wäre daher nur in aufwendiger Weise herzustellen, abgesehen davon, dass dies dazu führen würde, dass Befestigungsbereiche vorzusehen sind, die dazu führen, dass die beiden Teile nicht im gleichen Formwerkzeug hergestellt werden können.

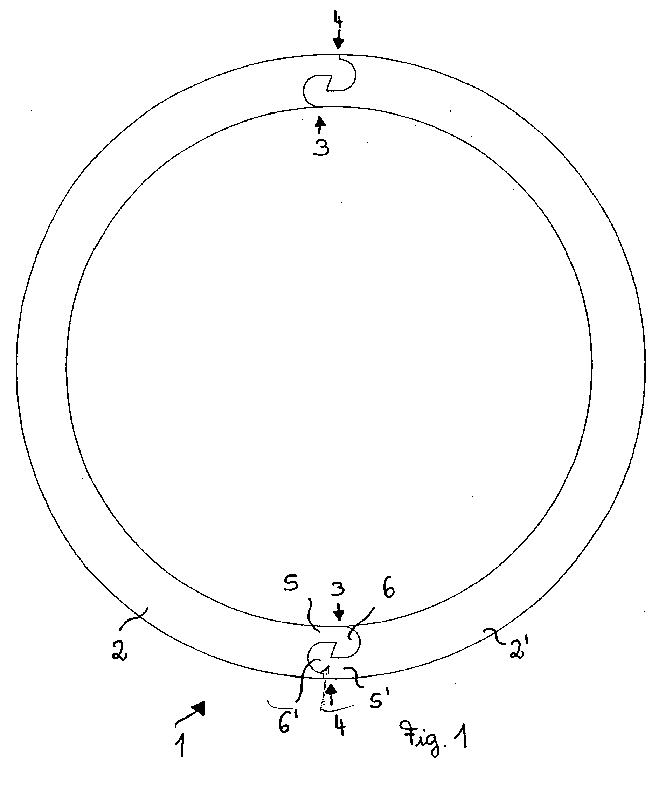

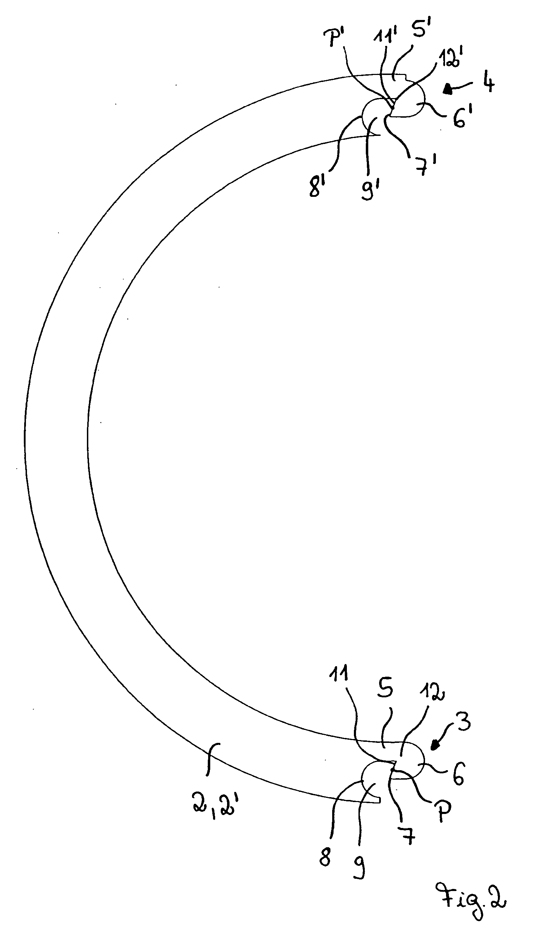

In der Figur 4b ist dargestellt, wie dieses Funktionsteil 21 über seinen Abschnitt 23 (Figur 4a) durch einen erfindungsgemäßen Schließring 1, wie er unter Bezugnahme auf die Figuren 1 bis 3c erläutert wurde, zusammengehalten wird. Der Schließring 1 sitzt dabei auf dem Bereich 23 des Funktionsteils 1 ebenfalls reib- bzw. kraftschlüssig auf, kann aber zusätzlich an einer Stirnwandung 24 eines Bereichs 25 des Funktionsteils 21 kraftschlüssig anliegen, allerdings nicht auch an der gegenüberliegenden Seite, da von dort aus das achsparallele Ineinanderschieben der beiden Teilringe 2, 2' zu erfolgen hat.

### Bezugszeichenliste

- 1: Ring
- 2, 2': Teilringe
- 3, 4: Formschlussausbildungen
- 5, 5': Steg
- 6, 6': Haken
- 7, 7': Kante
- 8, 8': Stirnwandung
- 9, 9': Ausnehmung

- 11, 11': innere Wandung
- 12, 12': Übergangskante

- 21: Funktionsteil
- 22, 22': Halbschalen
- 23: Abschnitt
- 24: Stirnwandung

## Patentansprüche

1. Schutzschlauch-Ring für einen Versorgungsleitungen aufnehmenden Schutzschlauch einer Maschine, wie eines Roboters, mit mindestens zwei miteinander zu verbindenden Teilringen (2, 2') mit als formschlüssig ineinander greifende Formausbildungen (3, 4) ausgebildeten Verbindungseinrichtungen an der Stirnseite der Teilringe (2, 2'), wobei die Formausbildungen (3, 4) nicht nachgiebige, einander hintergreifende Haken (6, 6') aufweisen.

2. Ring nach Anspruch 1, **dadurch gekennzeichnet, dass** die Formausbildungen (3, 4) im Wesentlichen punktsymmetrisch ausgebildet sind.

3. Ring nach Anspruch 1 oder 2, **dadurch gekennzeichnet, dass** hintergreifende Flächen (11, 11') der Formausbildungen (3, 4) geneigt zum Radius des Ringteils (1) ausgerichtet sind.

4. Ring nach Anspruch 3, **dadurch gekennzeichnet, dass** die zum Radius geneigt ausgebildeten Flächen (11, 11') von einer inneren konkaven Kante (12, 12'), in deren Bereich der Haken (6, 6') mit dem Teilring (2, 2') verbunden ist, zu einer äußeren freien konvexen Kante (7, 7) auf den eigentlichen Teilring (2, 2') hin verlaufen.

5. Ring nach einem der vorangehenden Ansprüche, **dadurch gekennzeichnet, dass** die Formausbildungen (3, 4) in axialer Richtung reibschlüssig gehalten sind.

## Claims

1. Protective hose ring for a protective hose of a machine, such as a robot, receiving supply lines, having at least two partial rings (2, 2') to be interconnected with connecting devices constructed as positively interlocking shaped structures (3, 4) on the front face of the partial rings (2, 2'), the shaped structures (3, 4) having non-flexible, mutually back-engaging hooks (6, 6').

2. Ring according to claim 1, **characterized in that** the shaped structures (3, 4) are constructed in a substantially point symmetrical manner.

3. Ring according to claim 1 or 2, **characterized in that** the back-engaging faces (11, 11') of the shaped structures (3, 4) are inclined to the radius of the ring (1).

4. Ring according to claim 3, **characterized in that** the faces (11, 11') inclined towards the radius run from an inner, concave edge (12, 12'), in whose vicinity hook (6, 6') is connected to the partial ring (2, 2'), to an external, free, convex edge (7, 7') on the partial ring (2, 2').

5. Ring according to one of the preceding claims, **characterized in that** the shaped structures (3, 4) are axially frictionally held.

## Revendications

1. Anneau de gaine de protection pour une gaine de protection recevant des lignes d'alimentation d'une machine, telles que celles d'un robot, comprenant au moins deux pièces d'anneaux (2, 2') à relier entre elles et présentant sur la face frontale des pièces d'anneaux (2, 2') des moyens de liaison conformés en éléments moulés (3,4) venant en prise à ajustement de forme, les éléments moulés (3,4) présentant des crochets (6, 6') non extensibles s'emboîtant les uns dans les autres.

2. Anneau selon la revendication 1, **caractérisé en ce que** les éléments moulés (3, 4) sont conformés selon une symétrie sensiblement ponctuelle.

3. Anneau selon l'une quelconque des revendications 1 ou 2, **caractérisé en ce que** les surfaces (11, 11') des éléments moulés (3, 4) qui s'emboîtent sont inclinées par rapport au rayon de la pièce d'anneau (1).

4. Anneau selon la revendication 3, **caractérisé en ce que** les surfaces (11, 11') conformées inclinées par rapport au rayon s'étendent d'un bord concave intérieur (12, 12') dans la zone duquel le crochet (6, 6') est relié à la pièce d'anneau (2, 2') vers un bord convexe extérieur libre (7, 7') sur la pièce d'anneau proprement dite (2, 2').

5. Anneau selon l'une quelconque des revendications précédentes, **caractérisé en ce que** les éléments moulés (3, 4) sont maintenus par friction en direction axiale.
